# EUROPEAN PATENT SPECIFICATION

(11) **EP 2 819 466 B1**
(45) Date of publication and mention of the grant of the patent: **28.10.2015**
(21) Application number: 13752367.6
(22) Date of filing: 15.02.2013
(51) Int. Cl.: H04W 56/00, H04W 84/18

(54) **MULTI-LAYERED WIRELESS COMMUNICATION SYSTEM**
MEHRSCHICHTIGES DRAHTLOSES KOMMUNIKATIONSSYSTEM
SYSTÈME DE COMMUNICATION SANS FIL À COUCHES MULTIPLES

(30) Priority: 20.02.2012 JP 2012034348
(43) Date of publication of application: 31.12.2014
(73) Proprietor: Panasonic Corporation, Kadoma-shi, Osaka 571-8501 (JP)
(72) Inventor: YAMAMOTO, Masahiro, Osaka 540-6207 (JP); HORIIKE, Yoshio, Osaka 540-6207 (JP); TANAKA, Takao, Osaka 540-6207 (JP)
(74) Representative: Schwabe - Sandmair - Marx
(86) International application number: PCT/JP2013/000834
(87) International publication number: WO 2013/125190

(56) References cited:
- EP-A1- 2 413 646
- EP-A1- 2 618 629
- JP-A- 2010 114 671
- JP-A- 2011 101 276
- US-A1- 2005 096 101

## Description

### Technical Field

The present invention relates to a multi-layer radio (wireless) communication system including radio terminals which are a master device, a relay device, and a slave device, and the relay device included in the radio communication system. Particularly, the present relates to a configuration for allowing the clocks of all of these radio terminals to be synchronized with each other.

### Background Art

There is a radio communication system which can perform radio communication between a certain radio terminal and another radio terminal via one or a plurality of relay devices. For example, Patent Literature 1 discloses a fire alarm system which is an exemplary application of the radio communication system. Or, as another exemplary application of the radio communication system, there is a meter reading system which automatically perform meter reading of a gas usage amount in a home. In this system, a slave device mounted in a gas meter in each home detects a gas flow value and the detected data is sent to a master device via one or a plurality of relay devices. The detected data is uploaded regularly or at specified times from the slave device to the master device voluntarily, or in response to a command from the master device.

It is important to select a location at which the relay device is placed so that the relay device can suitably relay a communication between the master device and the slave device. For this reason, it cannot be sometimes expected that the relay device actually placed is directly supplied with electric power from a power supply utility. Therefore, in general, the relay device is battery-driven. In the above mentioned system, there are many relay devices placed in a wide range as compared to the master device. To mitigate complexity in maintenance work, it is desired that the battery be changed with a reduced frequency (in other words, electric power consumption be reduced).

The electric power consumption in the radio terminals can be reduced effectively by performing the communication only at specified timings, and by placing the radio terminals in a sleep state in a period other than the specified timings, under a state in which the clocks of the radio terminals included in a communication route from the master device to the slave device are synchronized with each other. If a sleep period is set to long time, then the electric power consumption in the battery can be reduced significantly, which can realize, for example, a relay device which does not require a change of the battery for about 10 years. Moreover, there is known a technique in which in order to synchronize the radio terminals with each other, a beacon signal is transmitted and received regularly among the radio terminals to align (synchronize) their clocks.

### Citation List

### Patent Literature

Patent Literature 1: Japanese Laid-Open Patent Application Publication No. 2009-288897

EP 2 413 646 discloses a radiocommunication system with master terminals connected via relay terminals to slave terminals. The clocks of the terminals are synchronized with each other by transmitting beacon signals in a preset timing pattern. In order to avoid power consuming reception wait periods, the information about the used random delay time for beacon transmitting is shared by receive - and transmit terminal.

### Summary of Invention

### Technical Problem

To allow the radio terminal to receive the beacon signal, the radio terminal is required to exit from the sleep state and enter a reception wait state in which electric power is supplied to a radio circuit prior to the reception of the beacon signal. For this reason, if the reception wait state that passes before the radio terminal actually starts to receive the beacon signal becomes long, the electric power will be consumed wastefully.

The present invention has been made under the above stated circumstances, and an object of the present invention is to provide a radio communication system and a relay device which can lessen electric power consumption in a radio terminal at a reception side, for example, in communication of a beacon signal used in clock alignment (synchronization), etc.. Particularly, an object of the present invention is to provide a configuration that can lessen electric power consumption in a multi-layer radio communication system in which there exist one or a plurality relay devices between a master device and a slave device.

### Solution to Problem

According to the present invention, there is provided a multi-layer radio communication system in which an uppermost master device and a lowermost slave device are communicatively connected to each other via one or a plurality of relay devices, in which an upper device, an intermediate device, and a lower device which include the uppermost master device, the one or plurality of relay devices, and the lowermost slave device, are located on different successive layers, wherein the intermediate device is configured to: set a fixed point in a beacon signal transmitted from the upper device, calculate predicted time (TPg) which is back from the fixed point and until a time point at which the relay device starts to prepare for reception of the beacon signal, based on time (TPa) required to prepare for the reception of the beacon signal, time (TPb) required to receive data from a head of the beacon signal to the fixed point, and error time (TPy) generated in an internal clock of the relay device due to at least an ambient temperature, start to prepare for the reception of the beacon signal at time (t1) which is the predicted time back from predicted reception time (t2) of the fixed point, and obtain actual measurement time (TPm) which is from the time at which the intermediate device starts to prepare for the reception until actual reception time (t3) of the fixed point, compensate the internal clock of the intermediate device based on a history of an error (ΔTP) which is a difference between the predicted time and the actual measurement time, and transmit the beacon signal to the lower device after the intermediate device has compensated the internal clock; and wherein the lower device is configured to compensate its internal clock based on the beacon signal transmitted from the intermediate device after the intermediate device has compensated the internal clock.

In accordance with such a configuration, it becomes possible to reduce the time of the reception wait state of the relay device to shortest possible time, and therefore lessen electric power consumption required for the reception of the beacon signal. In addition, it becomes easier to synchronize the devices in the multi-layer radio communication system with each other.

In the multi-layer radio communication system of the present invention, a time axis of each of the upper device, the intermediate device, and the lower device may be divided into slots having a predetermined fixed time length (T); the upper device may be configured to transmit the beacon signal at a head of each of the slots; the intermediate device may be configured to transmit to the lower device the beacon signal containing information relating to an arbitrary time length (τ1) when the fixed time length and the arbitrary time length (τ1) pass, after the intermediate device receives the beacon signal from the upper device, the arbitrary time length (τ1) being set shorter than the fixed time length; and the lower device on a specified layer may be configured to transmit to another lower device which is on a layer lower than the specified layer, the beacon signal containing information relating to an arbitrary time length (τ2) when the fixed time length and the arbitrary time length (τ2) pass from time which is the arbitrary time length (τ1) of the relay device back from the time at which the lower device receives the beacon signal from the intermediate device after the lower device receives the beacon signal from the intermediate device, the arbitrary time length (τ2) being set shorter than the fixed time length.

In accordance with such a configuration, since it becomes possible to disperse within a specified time period the transmission timings of the beacon signals of the devices, the devices can be synchronized with each other earlier while avoiding a collision of the beacon signals.

### Advantageous Effects of Invention

In accordance with a multi-layer radio communication system of the present invention, it becomes possible to more effectively lessen electric power consumption at a reception terminal.

### Brief Description of Drawings

[Fig. 1] Fig. 1 is a schematic view showing the overall configuration of a multi-layer radio communication system according to an embodiment of the present invention.
[Fig. 2] Fig. 2 is a block diagram showing the functional configuration of each of terminals of Fig. 1.
[Fig. 3] Fig. 3 is a view exemplarily showing polling communication performed in the radio communication system and the configuration of a beacon signal.
[Fig. 4] Fig. 4 is a timing chart for explaining the configuration in a case where a relay device (lower device) performs compensation to be synchronized with a master device (upper device).
[Fig. 5] Fig. 5 is a timing chart for explaining the configuration in a case where the relay device (lower device) performs compensation to be synchronized with the master device (upper device).
[Fig. 6] Fig. 6 is a timing chart for explaining the configuration in a case where the relay device (lower device) performs compensation to be synchronized with the master device (upper device).
[Fig. 7] Fig. 7 is a view showing the configuration of a super-frame of a communication carrier (channel) of each terminal included in the radio communication system.
[Fig. 8] Fig. 8 is a timing chart showing setting of transmission timings of the beacon signal for avoiding a collision.

### Description of Embodiments

Hereinafter, a preferred embodiment of the present invention will be described with reference to the drawings.

### (Configuration of radio communication system)

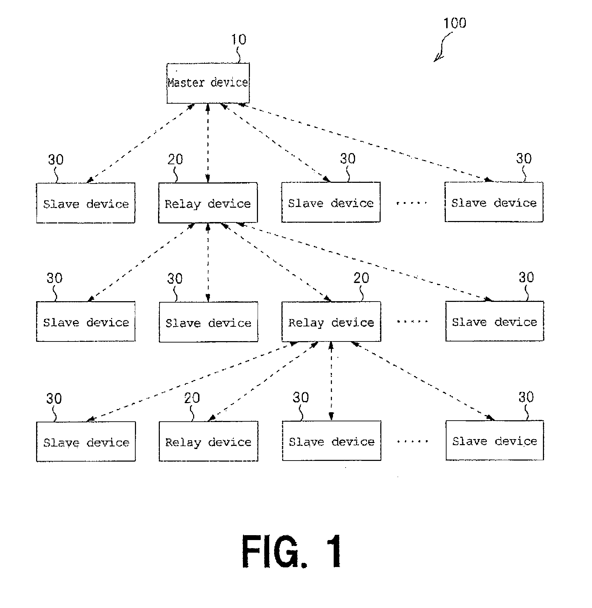

Fig. 1 is a schematic view showing the overall configuration of a multi-layer radio communication system according to an embodiment of the present invention. As shown in Fig. 1, a radio communication system 100 includes a master device 10, relay devices 20 and slave devices 30 which are radio terminals, and constructs communication routes in which the master device 10 is an uppermost device and the slave devices 30 are lowermost devices. The delay devices 20 of a suitable number are placed between the master device 10 and the slave devices 30, for example, in a case where a distance between the master device 10 and the slave devices 30 is long, or a favorable communication environment between the master device 10 and the slave devices 30 cannot be constructed due to an obstacle or the like existing between master device 10 and the slave devices 30. In the radio communication system 100, the terminals on the communication routes from the master device 10 to the slave devices 30 perform synchronization by receiving the beacon signal from their upper terminals (the detail will be described later).

In the example of Fig. 1, there exists a communication route having four layers at maximum. In the example of Fig. 1, the master device 10 is located on a first layer, the relay device 20 and the slave devices 30 which directly communicate with the master device 10 are located on a second layer, the relay device 20 and the slave devices 30 which directly communicate with the relay device 20 on the second layer are located on a third layer, and the relay device 20 and the slave devices 30 which directly communicate with the relay device 20 on the third layer are located on a fourth layer. The master device 10 is "upper device"(uppermost device), while the slave devices 30 are lower devices (lowermost devices). The relay device 20 located on the second layer is present between the master device 10 on the first layer and the relay device 20 or the slave devices 30 on the third layer, and therefore is not only an "intermediate device" but also a "lower device" from the perspective of the master device 10 on the first layer and an "upper device" from the perspective of the relay device 20 or the slave devices 30 on the third layer. In the same manner, the relay device 20 located on the third layer is not only an "intermediate device" but also a "lower device" or an upper "upper device" from another perspective.

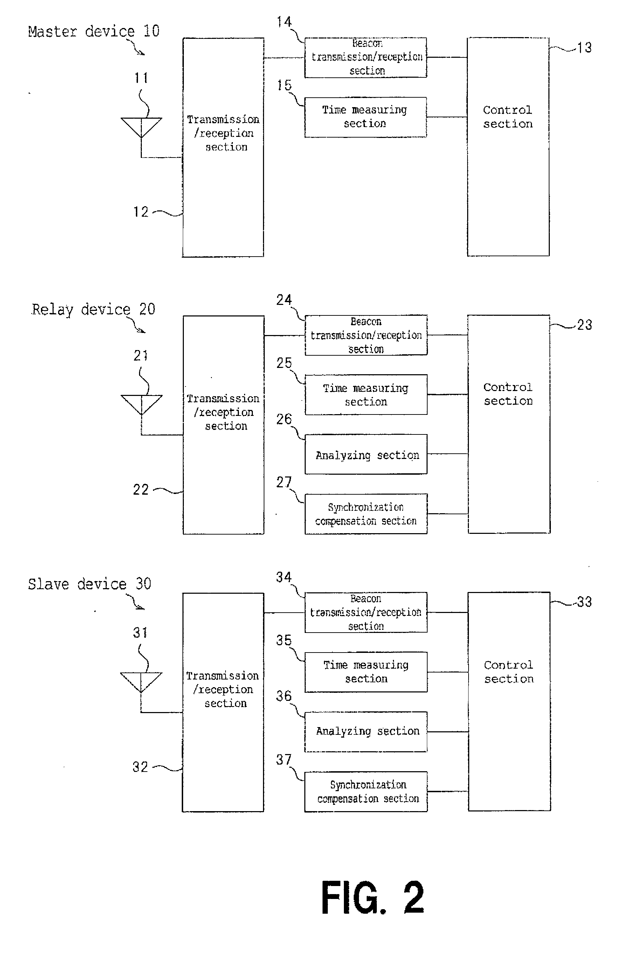

Fig. 2 is a block diagram showing the functional configuration of each of the terminals of Fig. 1. As shown in Fig. 2, the master device 10 includes at least an antenna 11, a transmission/reception section 12, a control section 13, a beacon transmission/reception section 14, and a time measuring section 15. The configuration of the antenna 11 is not particularly limited so long as it is able to transmit and receive an electric wave (radio wave) in a specified band, and a known antenna may be used. The transmission/reception section 12 transmits the electric wave in air via the antenna 11 and receives the electric wave transmitted in air via the antenna 11. For this purpose, the transmission/reception section 12 is configured as a radio transmission/reception circuit (e.g., RF circuit) which modulates data to be transmitted into a radio signal in a specified band, or demodulates the received radio signal.

The control section 13 is constituted by a MPU (micro-processing unit), etc., and controls the operations of the master device 10. The beacon transmission/reception section 14 transmits the beacon signal to another radio terminal (relay device 20 or slave device 30), or receives the beacon signal transmitted from another radio terminal, in response to a command issued by the control section 13. The time measuring section 15 includes an internal timer having a quartz oscillator or the like, and is capable of measuring present time or time that passes from a time point to another time point. The time measuring section 15 outputs the present time or measured time to the control section 31 in response to a command issued by the control section 13.

The relay device 20 includes at least an antenna 21, a transmission/reception section 22, a control section 23, a beacon transmission/reception section 24, a time measuring section 25, an analyzing section 26 and a synchronization compensation section 27. The antenna 21, the transmission/reception section 22, the control section 23, the beacon transmission/reception section 24, and the time measuring section 25 have functions and configurations similar to the antenna 11, the transmission/reception section 12, the control section 13, the beacon transmission/reception section 14, and the time measuring section 15 of the master device 10. The analyzing section 26 of the relay device 20 calculates information necessary for compensating a difference between the internal clock of that relay device 20 and the internal clock of the upper device (master device 10 or the upper relay device 20), based on the beacon signal received from the upper device. The synchronization compensation section 27 compensates the time axis of the internal clock of the relay device 20 as necessary based on the information calculated by the analyzing section 26.

The slave device 30 includes at least an antenna 31, a transmission/reception section 32, a control section 33, a beacon transmission/reception section 34, a time measuring section 35, an analyzing section 36 and a synchronization compensation section 37. The functions and configurations of the antenna 31, the transmission/reception section 32, the control section 33, the beacon transmission/reception section 34, the time measuring section 35, the analyzing section 36 and the synchronization compensation section 37 are similar to those of the antenna 21, the transmission/reception section 22, the control section 23, the beacon transmission/reception section 24, the time measuring section 25, the analyzing section 26 and the synchronization compensation section 27 of the relay device 20, and will not be described herein repeatedly.

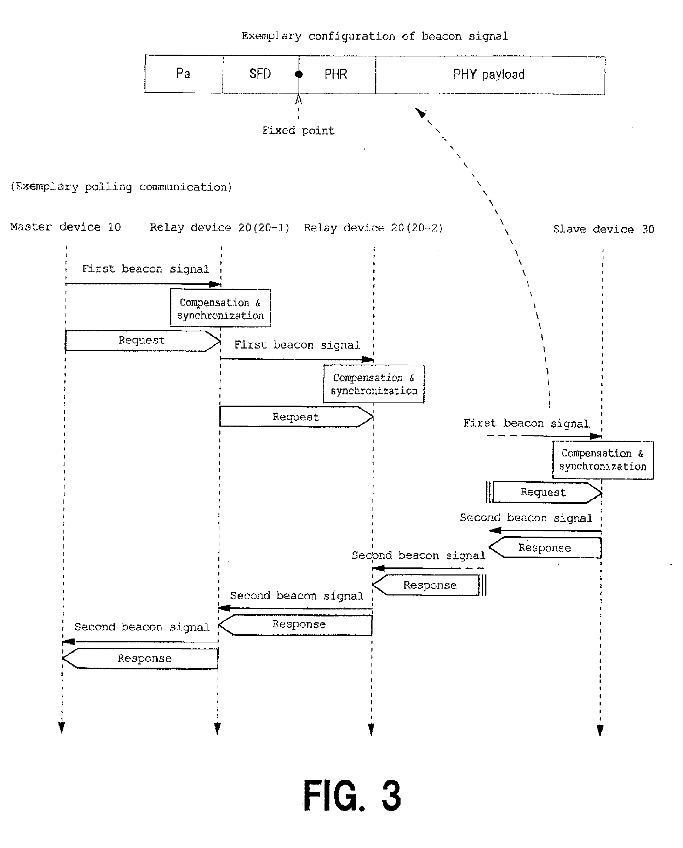

Fig. 3 shows polling communication as the exemplary communication performed in the radio communication system 100, and the exemplary configuration of the beacon signal transmitted and received in the radio communication system 100. In the polling communication of Fig. 3, firstly, a request signal (polling signal) is transmitted from the master device 10 to the slave device 30. Specifically, the master device 10 transmits a first beacon signal directed to the lower device, and thereafter transmits the request signal after a passage of specified time. The relay device 20 (relay device 20-1) which directly communicates with the master device 10 sequentially receives the first beacon signal and the request signal. In a period from when the relay device 20-1 receives the first beacon signal until it receives the request signal, it compensates its time axis based on the first beacon signal to synchronize its time axis with the time axis of the master device 10. Then, at a timing after the relay device 20-1 receives the request signal, the relay device 20-1 transmits the first beacon signal to the lower relay device 20 (relay device 20-2) and thereafter transmits (relays) the request signal after a passage of specified time.

Each of the relay devices 20 which are the lower devices of the relay device 20-2 compensates its time axis to synchronize its time axis with the time axis of the upper device upon reception of the first beacon signal from the upper device, and then receives the request signal. Then, the relay device 20 transmits the first beacon signal to the lower device, and thereafter transmits (relays) the request signal after a passage of specified time. This can establish the synchronization among all of the radio terminals on the communication route from the master device 10 to the slave device 30.

When the slave device 30 completes the reception of the request signal, it sends a response signal to the master device 10. Specifically, the slave device 30 transmits a second beacon signal directed to the upper device and transmits the response signal. Thereafter, receiving the second beacon signal and the response signal, the relay device 20 transmits the second beacon signal and the response signal to the upper device in the same manner. Then, when the response signal reaches the master device 10, the polling signal is accomplished.

In the above polling communication, using the first beacon signal directed to the lower device, the terminal compensates its time axis for synchronization, based on the received first beacon signal. Now, the configuration of the first beacon signal will be described in brief. As shown in Fig. 3, the first beacon signal includes a synchronization header (SHR) composed of a preamble (Pa) located at a head and a start frame delimiter (SFD) located subsequently to the preamble. The first beacon signal includes a physical layer header (PHR) subsequent to the synchronization header, and a payload (PHY payload) which is base data of the beacon signal and subsequent to the physical layer header.

### (Compensation for synchronization)

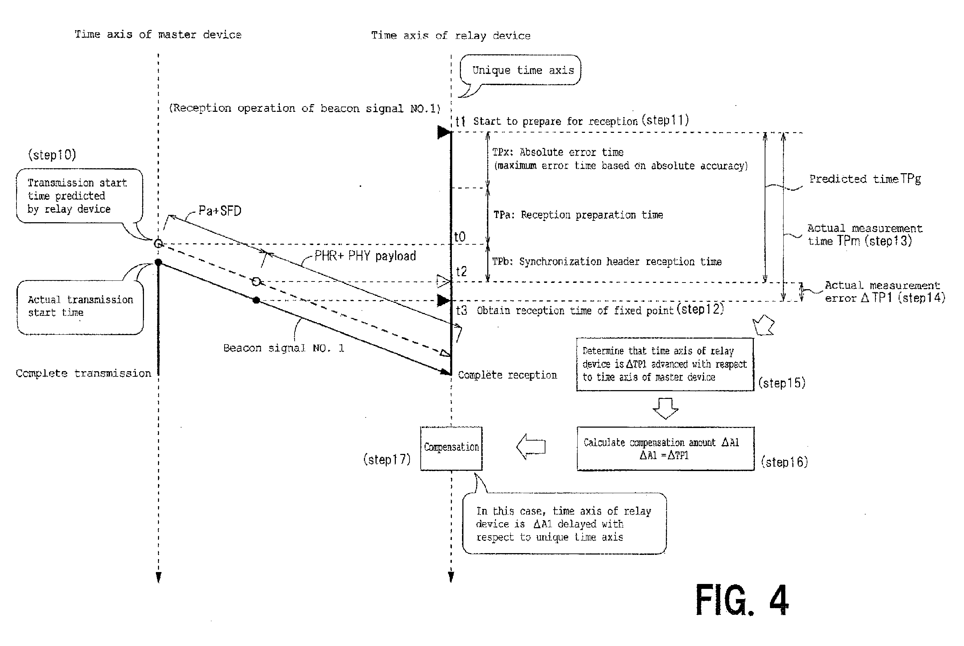

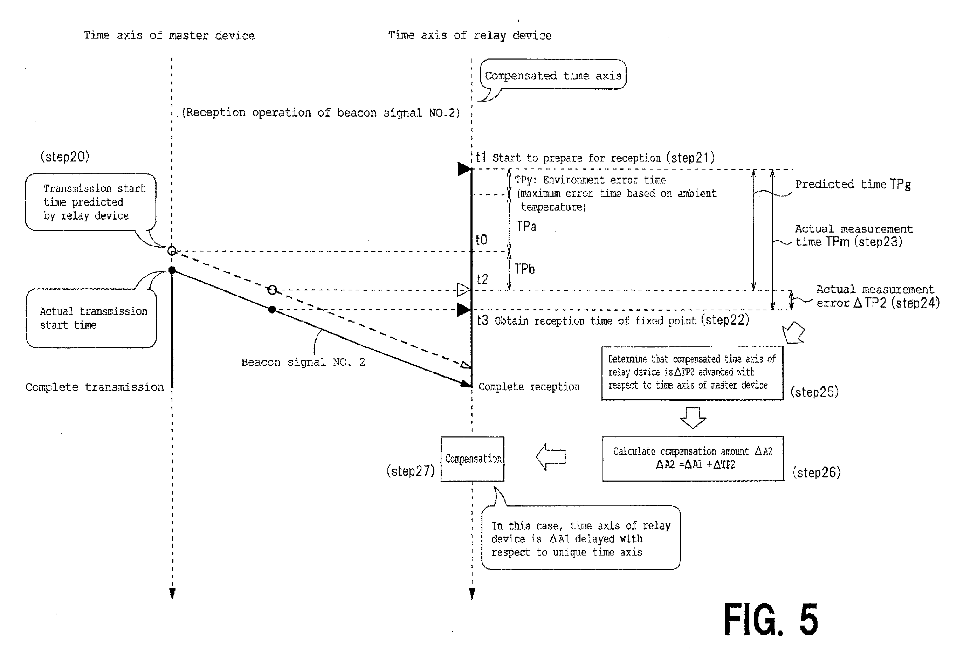

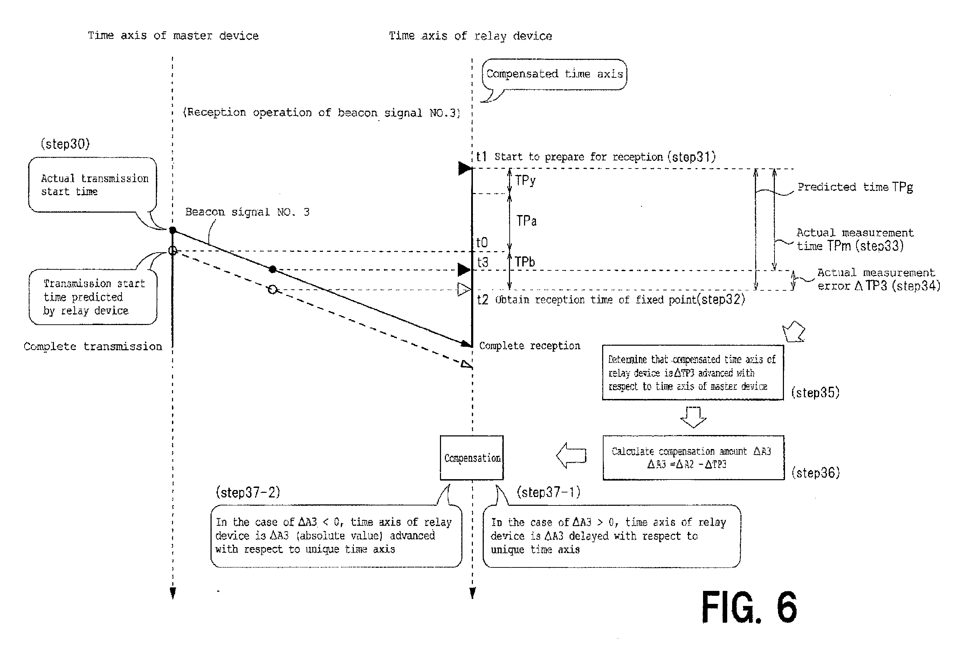

Next, how the lower device performs compensation to be synchronized with the upper device in the radio communication system 100 will be described with reference to Figs. 4 to 6. Figs. 4 to 6 show a case where the relay device 20 (lower device) performs compensation to be synchronized with the master device 10 (upper device). Also, Fig. 4 shows a case where the relay device 20 is synchronized with the master device 10 for the first time after the relay device 20 is activated. Fig. 5 shows compensation for delaying (retarding) the time axis as the compensation performed for synchronization at a timing which is subsequent to the timing of the compensation for synchronization of Fig. 4. Fig. 6 shows compensation for advancing the time axis as the compensation performed for synchronization at a timing which is subsequent to the timing of the compensation for synchronization of Fig. 5. Hereinafter, the compensation will be described sequentially with reference to Figs. 4 to 6.

### (1) First compensation for synchronization

Firstly, the compensation for synchronization of Fig. 4 will be described. In a state in which synchronization is not established yet (even once) between the master device 10 and the relay device 20, each of the master device 10 and the relay device 20 measures time along its time axis. Note that in each of the radio terminals, clock alignment (synchronization) has been already made, for example, by receiving a standard electric wave, when it is installed. Therefore, there is no substantial difference in the time axis unique to each radio terminal, and the time axis may contain a difference of an error attributed to absolute accuracy of the internal clock of the radio terminal. Hereinafter, maximum error time attributed to the absolute accuracy of the internal clock of the relay device 20 will be referred to as "absolute error time TPx".

The relay device 20 sets a fixed point in the beacon signal transmitted from the master device 10. This fixed point may be any location with a fixed data length from the head of the beacon signal. In the present embodiment, for example, the fixed point is set to a terminal end of the synchronization header (SHR) (see Fig. 3). Therefore, the relay device 20 can identify the time point at which the fixed point in the beacon signal is received, when it completes the reception of the synchronization header (SHR).

In the relay device 20, information indicative of the time at which the master device 10 as the upper device starts to transmit the beacon signal, or information indicative of time intervals of the transmission are pre-stored. Therefore, even in the state in which synchronization is not established yet between the master device 10 and the relay device 20, the relay device 20 can obtain information indicative of rough time of the transmission of the beacon signal from the master device 10. To receive the beacon signal, the relay device 20 starts to prepare for the reception of the beacon signal prior to predicted time at which the master device 10 starts to transmit the beacon signal.

If the relay device 20 starts to prepare for the reception earlier than necessary, then extra time that passes from when the relay device 20 enters a reception-enable state until it actually receives the beacon signal becomes long, which increases electric power consumption. On the other hand, if the relay device 20 starts to prepare for the reception too late, then the beacon signal will reach the relay device 20 before it enters the reception-enable state. In this case, it is likely that the relay device 20 cannot receive the beacon signal properly. To avoid this, in the radio communication system 100 of the present embodiment, the relay device 20 starts to prepare for the reception of the beacon signal, at time t1 which is necessarily and sufficiently back from predicted time t0 (transmission time t0 predicted by the relay device 20) at which the master device 10 starts to transmit the beacon signal.

More specifically, the relay device 20 obtains the predicted time t0 at which the master device 10 starts to transmit the beacon signal (step 10). At the time t1 which is specified time back from the predicted time t0, which specified time is a sum of reception preparation time TPa and the absolute error time TPx, the relay device 20 starts to prepare for the reception (step 11). In other words, the relay device 20 starts to prepare for the reception at the time t1 which is specified time back from predicted time t2 (reception time t2 predicted by the relay device 20) at which the relay device 20 receives the fixed point in the beacon signal of the master device 10, which specified time is a sum of synchronization header reception time TPb, the reception preparation time TPa and the absolute error time TPx.

The absolute error time TPx can be obtained based on, for example, the transmission cycle (e.g., several seconds) of the beacon signal of the master device 10 and the absolute accuracy (ppm) of the quarts oscillator within the time measuring section 25 of the relay device 20. To this end, the relay device 20 may be configured to pre-store information indicative of the transmission cycle of the beacon signal of the master device 10 and information indicative of the absolute accuracy of the quarts oscillator in the relay device 20.

The reception preparation time TPa refers to a time period required to prepare for the reception, in which the relay device 20 transits from a sleep state to the reception-enable state. The synchronization header reception time TPb refers to a time period required for the relay device 20 to receive the synchronization header (Pa + SFD) of the beacon signal and means the time length of the synchronization header of the beacon signal. As can be seen from Fig. 4, the time which is the sum of the reception preparation time TPa, the synchronization header reception time TPb, and the absolute error time TPx, is predicted time from the reception preparation start time t1 until the predicted time t2 at which the relay device 20 receives the fixed point in the beacon signal. Accordingly, hereinafter, for the sake of convenience, time from the reception preparation start time t1 until the predicted time t2 at which the relay device 20 receives the fixed point in the beacon signal, will be referred to as "predicted time TPg".

The relay device 20 starts to prepare for the reception at the time t1 set as described above and measures time that passes from the time t1. Then, when the relay device 20 actually starts to receive the beacon signal (beacon signal NO.1 in Fig. 4) from the master device 10, it obtains reception time of the fixed point in the beacon signal (step 12). That is, the relay device 20 detects a time point at which it completes the reception of the synchronization header, and decides the time as time t3 at which it actually receives the fixed point. Then, the relay device 20 calculates time that passes from the time t1 to the time t3 (step 13). The time that passes from the time t1 to the time t3 is time from when the relay device 20 starts to prepare for the reception to the time at which it actually receives the fixed point in the beacon signal. To compare the time that passes from the time t1 to the time t3 to the predicted time TPg, this time will be referred to as "actual measurement time TPm".

A possibility that the predicted time t2 at which the relay device 20 receives the fixed point in the beacon signal coincides with the actual reception time t3 is not high. As should be understood from the above, since the master device 10 and the relay device 20 are not synchronized with each other, there is a possibility that there is a time difference in which the absolute error time TPx is a maximum value. Therefore, when there is a difference in time axis between the master device 10 and the relay device 20, and the time t2 and the time t3 do not coincide with each other, this time difference arises as a difference (hereinafter will be referred to as "actual measurement error ΔTP") between the predicted time TPg and the actual measurement time TPm. In other words, if the actual measurement error ΔTP is detected (step 14), then a difference in time axis between the master device 10 and the relay device 20 can be obtained.

In the example of Fig. 4, when the time axis of the relay device 20 is a basis, the actual reception time of the fixed point is the time t3 which is delayed with respect to the predicted time t2. Therefore, the actual measurement time TPm is longer than the predicted time TPg, and an actual measurement error ΔTP1 represented by ΔTP1 = TPm -

TPg is obtained (step 14). In the case of TPm > TPg, it can be determined that the time axis of the relay device 20 is ΔTP1 advanced with respect to the time axis of the master device 10 (step 15). Therefore, the relay device 20 decides the actual measurement error ΔTP1 ΔTP1 obtained in the present case as a compensation amount ΔA1 (step 16), and compensates its time axis so that the time axis is ΔTP1 delayed with respect to the time axis (time axis set initially) unique to the relay device 20 (step 17). This allows the relay device 20 and the master device 10 to be synchronized with each other because the error attributed to the absolute accuracy has been eliminated.

### (2) Second and the following compensation for synchronization (case where time axis is advanced)

Even after the compensation has been performed for synchronization as described above, there may be a possibility that a time difference still exists between the master device 10 and the relay device 20. A cause of the time difference may be a temperature change in an environment in which the master device 10 and the relay device 20 are placed. Specifically, each of the time measuring sections 15, 25, 35 which are included in the master device 10, the relay device 20, and the slave device 30, respectively, includes a quartz oscillator and other circuit elements, and their characteristics change depending on an ambient temperature. The values of rates of the change in the characteristics are unique to the quartz oscillator and other circuit elements mounted in the terminals. Because of this, even after the compensation has been performed for synchronization once, a difference may occur in time axis between the terminals according to a change in the ambient temperature. In light of this, in the system 100, the second and following compensation is performed for synchronization as shown in Fig. 5 or 6.

Firstly, how the compensation is performed for synchronization, shown in Fig. 5, will be described. In the example of Fig. 5, in a case where the time axis of the relay device 20 is advanced with respect to the time axis of the master device 10, due to the ambient temperature, the time axis of the relay device 20 is compensated to be synchronized with the time axis of the master device 10.

The relay device 20 obtains the predicted time t0 at which the master device 10 starts to transmit the beacon signal, on the basis of the time axis of the relay device 20 which has been compensated for synchronization at most recent time (step 20). Then, the relay device 20 starts to prepare for the reception at the time t1 which is specified time back from the predicted time t0, which specified time is a sum of the reception preparation time TPa and environment error time TPy (step 21). The environment error time TPy refers to error time attributed to the above stated change in the ambient temperature. By storing information of accuracy (ppm) relating to a temperature change of the relay device 20, the environment error time TPy can be obtained from this information and the time that passes from compensation performed for synchronization in a previous case (i.e., transmission cycle of the beacon signal from the master device 10).

The relay device 20 starts to prepare for the reception at the time t1 set as described above and measures time that passes from the time t1. Then, when the relay device 20 actually starts to receive the beacon signal (beacon signal NO.2 in Fig. 5) from the master device 10, it obtains the time t3 at which it receives the fixed point in the beacon signal (step 22). Then, the relay device 20 calculates the actual measurement time TPm which is time that passes from the time t1 to the time t3 (step 23), and obtains the actual measurement error ΔTP which is a difference between the actual measurement time TPm and the predicted time TPg (step 24). As shown in Fig. 5, in the second and following compensation performed for synchronization, the predicted time TPg is the time from the time t1 to the time t3, but is different in that the predicted time TPg is the time which is a sum of the reception preparation time TPa, the synchronization header reception time TPb, and the environment error time TPy (the same applies to Fig. 6 as will be described later).

In the example of Fig. 5, when the time axis (time axis after the previous compensation performed for synchronization) of the relay device 20 is a basis, the actual reception time of the fixed point is the time t3 which is delayed with respect to the predicted time t2. Therefore, the actual measurement time TPm is longer than the predicted time TPg, and an actual measurement error ΔTP2 represented by ΔTP2 = TPm - TPg is obtained (step 24). In the case of TPm > TPg, it can be determined that the time axis of the relay device 20 is ΔTP2 advanced with respect to the time axis of the master device 10 (step 25). Therefore, the relay device 20 decides a compensation amount ΔA2 based on the actual measurement error ΔTP2 obtained in the present case and a past history of the actual measurement errors ΔTP. Specifically, the relay device 20 decides as the compensation amount ΔA2 in the present case a sum of the actual measurement error ΔTP2 obtained in the present case and the compensation amount ΔA1 in the previous case (step 26). Then, the relay device 20 compensates its time axis so that the time axis is ΔA2 delayed with respect to the time axis (time axis set initially) unique to the relay device 20 (step 27). This allows the relay device 20 and the master device 10 to be synchronized with each other because the error attributed to the absolute accuracy has been eliminated.

### (3) Second and the following compensation for synchronization (case where time axis is delayed)

Next, how the compensation is performed for synchronization, shown in Fig. 6, will be described. In the example of Fig. 6, in a case where the time axis of the relay device 20 is delayed with respect to the master device 10, due to the ambient temperature, the time axis of the relay device 20 is compensated to be synchronized with the time axis of the master device 10.

The relay device 20 obtains the predicted time t0 at which the master device 10 starts to transmit the beacon signal, on the basis of the time axis of the relay device 20 which has been compensated for synchronization at most recent time (step 30). Then, the relay device 20 starts to prepare for the reception at time t1 which is specified time back from the predicted time t0, which specified time is a sum of the reception preparation time TPa and the environment error time TPy (step 31).

The relay device 20 starts to prepare for the reception at the time t1 set as described above and measures time that passes from the time t1. Then, when the relay device 20 actually starts to receive the beacon signal (beacon signal NO.3 in Fig. 6) from the master device 10, it obtains the time t3 at which it receives the fixed point in the beacon signal (step 32). Then, the relay device 20 calculates the actual measurement time TPm which is time that passes from the time t1 to the time t3 (step 33), and obtains the actual measurement error ΔTP which is a difference between the actual measurement time TPm and the predicted time TPg (step 34).

In the example of Fig. 6, when the time axis (time axis after the previous compensation performed for synchronization) of the relay device 20 is a basis, the actual reception time of the fixed point is the time t3 which is earlier than the predicted time t2. Therefore, the actual measurement time TPm is shorter than the predicted time TPg, and the actual measurement error ΔTP2 represented by ΔTP2 = TPg - TPm is obtained (step 34). In the case of TPm < TPg, it can be determined that the time axis of the relay device 20 is ΔTP2 delayed with respect to the time axis of the master device 10 (step 35). Therefore, the relay device 20 decides a compensation amount ΔA3 based on the actual measurement error ΔTP3 obtained in the present case and the past history of the actual measurement errors ΔTP. Specifically, the relay device 20 decides as the compensation amount ΔA3 in the present case a value derived by subtracting the actual measurement error ΔTP3 obtained in the present case from the compensation amount ΔA2 in the previous case (step 36).

In the case of the compensation amount ΔA3 > 0, the relay device 20 compensates its time axis so that the time axis is ΔA3 delayed with respect to the time axis (time axis set initially) unique to the relay device 20 (step 37-1). On the other hand, in the case of the compensation amount ΔA3 < 0 , the relay device 20 compensates its time axis so that the time axis is ΔA3 (absolute value) advanced with respect to the time axis (time axis set initially) unique to the relay device 20 (step 37-2). This allows the relay device 20 and the master device 10 to be synchronized with each other because the error attributed to the absolute accuracy has been eliminated.

As described above, the compensation is performed to provide synchronization between the master device 10 and the relay device 20 so that the internal clocks of these terminals are synchronized with each other. Then, as shown in Fig. 3, the relay device 20 which has completed the compensation for synchronization transmits the beacon signal to the lower device, and the lower relay device 20 or the lower slave device 30 receives the beacon signal and can be synchronized with the upper device, in the same manner as described above. As a result, the clocks of all of the terminals from the master device 10 to the slave devices 30 can be synchronized with each other. In addition, in the first compensation performed for synchronization, the reception preparation start time t1 is decided considering the absolute error time TPx, and in the second and the following compensation, the reception preparation start time t1 is decided considering the environment error time TPy. Since the reception wait state of the beacon signal can be reduced in time in the above described manner, wasteful electric power consumption can be suppressed, and exhausting of the battery can be suppressed.

### (Prevention of collision of beacon signal)

In some cases, a plurality of upper devices are communicatively placed to correspond to one lower device in the radio communication system 100. In such a case, if the plurality of upper devices transmit beacon signals at the same time, these signals may collide and the lower device cannot receive these beacon signals. To avoid such a situation, in the radio communication system 100 of the present embodiment, the transmission timings of the beacon signals from the upper devices to the lower device are decided at random within a predetermined time range. Hereinafter, how the collision of the beacon signals is prevented will be described.

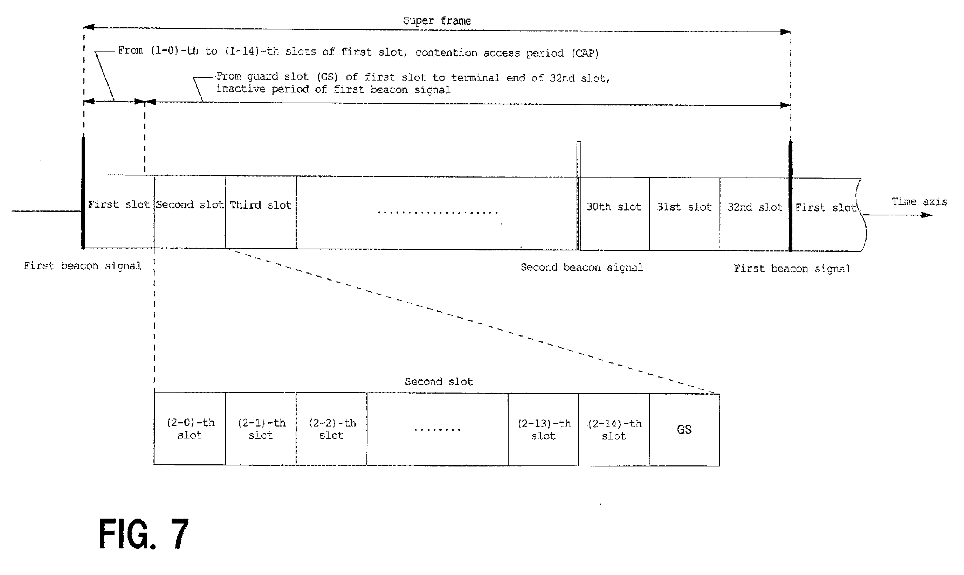

Fig. 7 is a view showing the configuration of a frame of a communication carrier (channel) of each terminal. In the present embodiment, a super frame is used. As shown in Fig. 7, the super frame is a frame sectioned by the beacon signals. In the present embodiment, the super frame is equally divided into 32 parts which are 1st to 32nd slots with an equal time length T. Furthermore, each slot is equally divided into 16 parts with an equal time length. As shown in Fig. 7, for example, the 2nd slot includes 16 slots which are (2-0)-th to (2-14)-th slots and a guard slot (GS). In the super frame, (1-0)-th to (1-14)-th slots of the 1st slot, which are other than the guard slot in the first slot, are set to a contention access period (CAP). A portion of the super frame which is other than the CAP, is set to an inactive period.

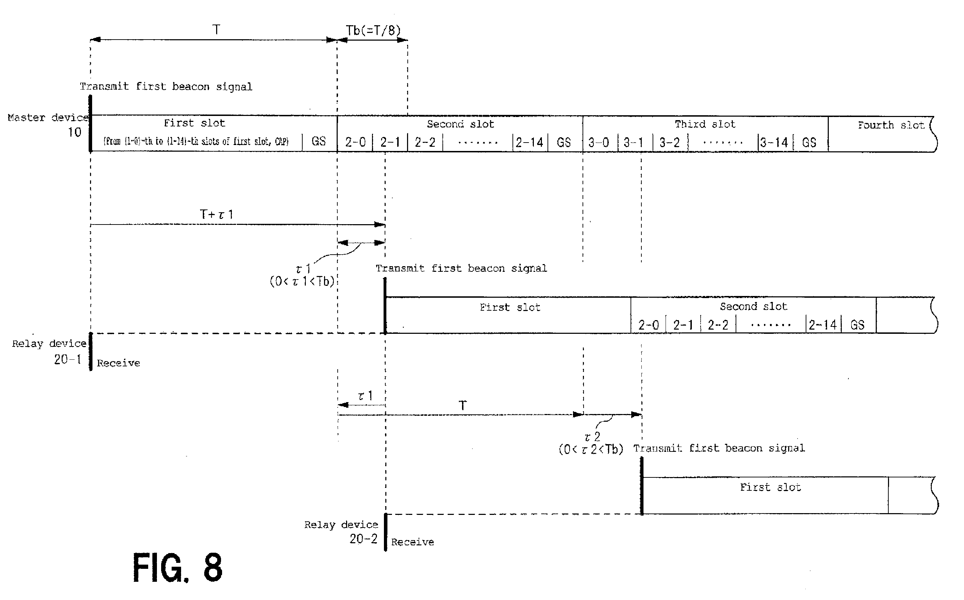

Fig. 8 is a timing chart showing setting of the transmission timings of the beacon signals for avoiding a collision. Fig. 8 shows a case where the master device 10 transmits the beacon signal, and thereafter the relay device 20-1 as the lower device of the master device 10 and the relay device 20-2 as the lower device of the relay device 20-1 sequentially decide the transmission timings of the beacon signal.

As shown in Fig. 8, when the master device 10 transmits the beacon signal, the relay device 20-1 receives this beacon signal. The relay device 20-1 transmits the beacon signal to the lower relay device 20-2 at a time point when time (T + τ1) which is a sum of the time length T and random delay time τ1, passes after the time point when the relay device 20-1 receives the beacon signal from the master device 10. This beacon signal contains information relating to the delay time τ1 used in the present transmission, and information relating to the delay time τ1 used in next transmission.

The delay time τ1 is set in the relay device 20-1 as a time length in a specified range which is shorter than the time length T, and may be changeable in each transmission of the beacon signal. In the present embodiment, the delay time τ1 is set such that 0 < τ1 < Tb (T/8). Therefore, when the time axis of the master device 10 is a basis, the relay device 20-1transmits the beacon signal to the relay device 20-2 at a time point within a period from head time of the (2-0)-th slot of the master device 10 to terminal end time of the (2-1)-th slot of the master device 10, after the master device 10 transmits the beacon signal (see Fig. 8).

Then, when the relay device 20-2 receives the beacon signal from the relay device 20-1 as the upper device, it obtains the information relating to the delay time τ1 contained in the beacon signal. At a time point when time (T - τ1 + τ2) which is derived by summing up the time length T and random delay time τ2 and by subtracting the delay time τ1, passes, the relay device 20-2 transmits the beacon signal toward the lower device. This beacon signal also contains the information relating to the delay time τ2 used in the present transmission, and the information relating to the delay time τ2 used in next transmission.

The delay time τ2 is also set in the relay device 20-2 as a time length in a specified range which is shorter than the time length T, and may be changeable in each transmission of the beacon signal. In the present embodiment, the delay time τ2 is set such that 0 < τ2 < Tb. Therefore, when the time axis of the master device 10 is a basis, the relay device 20-2 transmits the beacon signal toward the lower device at a time point within a period from head time of the (3-0)-th slot of the master device 10 to terminal end time of the (3-1)-th slot of the master device 10, after the master device 10 transmits the beacon signal (see Fig. 8).

In the above described configuration, the transmission timings of the beacon signals of the respective relay devices 20 become random within a specified range. This makes it possible to prevent a situation in which the plurality of upper devices transmit the beacon signals at the same time toward the same lower device. In addition, the relay device 20-N located on N-th lower layer from the perspective of the master device 10 transmits the beacon signal within (N + 1)-th slot of the master device 10. Therefore, even in a system having many layers, the compensation performed to synchronize all of the terminals from the master device 10 to the slave devices 30 with each other can be completed within a short time.

For example, in the polling communication of Fig. 3, the request signal is transmitted from the master device 10 toward the slave device 30, and thereafter the response signal is transmitted from the slave device 30 toward the master device 10. In conjunction with this, the first beacon signal is transmitted to the lower device, and thereafter the second signal is transmitted to the upper device. In the present embodiment, the timing at which the relay device 20-N transmits the second beacon signal is set to a time point when time {(30 - N × 2) × T} passes after the timing at which the relay device 20-N transmits the first beacon signal. For example, the relay device 20-1 transmits the second beacon signal at a time point (30-th slot of the master device 10) when 28T time passes after the transmission timing (2nd slot of the master device 10) of the first beacon signal. Therefore, the master device 10 can receive the second beacon signal from the lower device, within the same super frame as the super frame in which the master device 10 transmits the first beacon signal.

### Industrial Applicability

As should be understood from the above, the present invention is suitably applicable to a multi-layer radio communication system for lessening electric power consumption in a reception terminal.

### Reference Signs List

- 10: master device
- 20: relay device
- 30: slave device
- 100: radio communication system

## Claims

1. A multi-layer radio communication system in which an uppermost master device and a lowermost slave device are communicatively connected to each other via one or a plurality of relay devices,
in which an upper device, an intermediate device, and a lower device which include the uppermost master device, the one or plurality of relay devices, and the lowermost slave device, are located on different successive layers,
wherein the intermediate device is configured to:
set a fixed point in a beacon signal transmitted from the upper device,
calculate predicted time (TPg) which is back from the fixed point and until a time point at which the relay device starts to prepare for reception of the beacon signal, based on time (TPa) required to prepare for the reception of the beacon signal, time (TPb) required to receive data from a head of the beacon signal to the fixed point, and error time (TPy) generated in an internal clock of the relay device due to at least an ambient temperature,
start to prepare for the reception of the beacon signal at time (t1) which is the predicted time back from predicted reception time (t2) of the fixed point, and obtain actual measurement time (TPm) which is from the time at which the intermediate device starts to prepare for the reception until actual reception time (t3) of the fixed point,
compensate the internal clock of the intermediate device based on a history of an error (ΔTP) which is a difference between the predicted time and the actual measurement time, and
transmit the beacon signal to the lower device after the intermediate device has compensated the internal clock; and
wherein the lower device is configured to compensate its internal clock based on the beacon signal transmitted from the intermediate device after the intermediate device has compensated the internal clock.

2. The multi-layer radio communication system according to claim 1,
wherein a time axis of each of the upper device, the intermediate device, and the lower device is divided into slots having a predetermined fixed time length (T);
wherein the upper device is configured to transmit the beacon signal at a head of each of the slots;
wherein the intermediate device is configured to transmit to the lower device the beacon signal containing information relating to an arbitrary time length (τ1) when the fixed time length and the arbitrary time length (τ1) pass, after the intermediate device receives the beacon signal from the upper device, the arbitrary time length (τ1) being set shorter than the fixed time length; and
wherein the lower device on a specified layer is configured to transmit to another lower device which is on a layer lower than the specified layer, the beacon signal containing information relating to an arbitrary time length (τ2) when the fixed time length and the arbitrary time length (τ2) pass from time which is the arbitrary time length (τ1) of the relay device back from the time at which the lower device receives the beacon signal from the intermediate device after the lower device receives the beacon signal from the intermediate device, the arbitrary time length (τ2) being set shorter than the fixed time length.

## Patentansprüche

1. Mehrschichtiges Funkkommunikationssystem, in dem eine höchste Master-Vorrichtung und eine unterste Slave-Vorrichtung kommunikativ über eine oder mehrere Relais-Vorrichtungen miteinander verbunden sind,
in dem sich eine obere Vorrichtung, eine dazwischenliegende Vorrichtung und eine untere Vorrichtung, die die höchste Master-Vorrichtung, die eine oder die mehreren Relais-Vorrichtungen und die unterste Slave-Vorrichtung enthalten, auf verschiedenen aufeinanderfolgenden Schichten befinden,
wobei die dazwischenliegende Vorrichtung konfiguriert ist:
einen Fixpunkt in einem Bakensignal, das von der oberen Vorrichtung übertragen wird, zu setzen,
eine vorhergesagte Zeit (TPg), die hinter dem Fixpunkt und bis zu einem Zeitpunkt liegt, zu dem die Relais-Vorrichtung beginnt, sich auf den Empfang des Bakensignals vorzubereiten, anhand der Zeit (TPa), die benötigt wird, um den Empfang des Bakensignals vorzubereiten, der Zeit (TPb), die benötigt wird, um die Daten ab einem Anfang des Bakensignals an den Fixpunkt zu empfangen, und der Fehlerzeit (TPy), die in einer internen Uhr der Relais-Vorrichtung mindestens aufgrund einer Umgebungstemperatur erzeugt wird, zu berechnen,
zu beginnen, den Empfang des Bakensignals zu der Zeit (t1), die die vorhergesagte Zeit hinter der vorhergesagten Empfangszeit (t2) des Fixpunkts ist, vorzubereiten, und die eigentliche Messzeit (TPm), die sich von dem Zeitpunkt, zu dem die dazwischenliegende Vorrichtung beginnt, den Empfang vorzubereiten, bis zu dem eigentlichen Empfangszeitpunkt (t3) des Fixpunkts erstreckt, zu erhalten,
die interne Uhr der dazwischenliegenden Vorrichtung anhand eines Verlaufs eines Fehlers (ΔTP), der eine Differenz zwischen der vorhergesagten Zeit und der eigentlichen Messzeit ist, auszugleichen, und
das Bakensignal an die untere Vorrichtung zu übertragen, nachdem die dazwischenliegende Vorrichtung die interne Uhr ausgeglichen hat; und
wobei die untere Vorrichtung konfiguriert ist, ihre interne Uhr anhand des Bakensignals, das von der dazwischenliegenden Vorrichtung übertragen worden ist, auszugleichen, nachdem die dazwischenliegende Vorrichtung die interne Uhr ausgeglichen hat.

2. Mehrschichtiges Funkkommunikationssystem nach Anspruch 1,
wobei eine Zeitachse der oberen Vorrichtung, der dazwischenliegenden Vorrichtung und der unteren Vorrichtung in Zeitfenster mit einer vorgegebenen festgelegten Zeitdauer (T) unterteilt ist;
wobei die obere Vorrichtung konfiguriert ist, das Bakensignal bei einem Anfang jedes der Zeitfenster zu übertragen;
wobei die dazwischenliegende Vorrichtung konfiguriert ist, das Bakensignal, das Informationen, die eine beliebige Zeitdauer (_{T}1) betreffen, enthält, an die untere Vorrichtung zu übertragen, wenn die festgelegte Zeitdauer und die beliebige Zeitdauer (_{T}1) verstreichen, nachdem die dazwischenliegende Vorrichtung das Bakensignal von der oberen Vorrichtung empfangen hat, wobei die beliebige Zeitdauer (τ1) kürzer als die festgelegte Zeitdauer gesetzt ist; und
wobei die untere Vorrichtung auf einer angegebenen Schicht konfiguriert ist, das Bakensignal, das Informationen, die eine beliebige Zeitdauer (τ2) betreffen, enthält, an eine andere untere Vorrichtung, die sich auf einer Schicht befindet, die niedriger als die angegebene Schicht ist, zu übertragen, wenn die festgelegte Zeitdauer und die beliebige Zeitdauer (τ2) ab der Zeit verstreichen, die die beliebige Zeitdauer (τ1) der Relais-Vorrichtung hinter dem Zeitpunkt ist, zu dem die untere Vorrichtung das Bakensignal von der dazwischenliegenden Vorrichtung empfängt, nachdem die untere Vorrichtung das Bakensignal von der dazwischenliegenden Vorrichtungen empfangen hat, wobei die beliebige Zeitdauer (τ2) kürzer als die festgelegte Zeitdauer gesetzt ist.

## Revendications

1. Système de communication radio multi-couche dans lequel un dispositif maître supérieur et un dispositif esclave inférieur sont connectés de manière communicative l'un avec l'autre par l'intermédiaire d'un ou d'une pluralité de dispositifs de relais,
dans lequel un dispositif supérieur, un dispositif intermédiaire et un dispositif inférieur, qui comprennent le dispositif maître supérieur, le ou la pluralité de dispositifs de relais et le dispositif esclave inférieur, sont disposés sur des couches successives différentes,
dans lequel le dispositif intermédiaire est conçu pour :
régler un point fixe dans un signal de balise transmis par le dispositif supérieur,
calculer un temps prédit (TPg) qui est en arrière du point fixe et jusqu'à un point dans le temps auquel le dispositif de relais commence à se préparer à la réception du signal de balise, sur la base d'un temps (TPa) requis pour se préparer à la réception du signal de balise, d'un temps (TPb) requis pour la réception de données provenant d'une tête du signal de balise au point fixé et un temps d'erreur (TPy) généré dans une horloge interne du dispositif de relais, du fait d'au moins une température ambiante,
commencer à se préparer à la réception du signal de balise au temps (t1) qui est le temps prédit en arrière de l'instant de réception prédit (t2) du point fixe et obtenir un temps de mesure effectif (TPm) qui s'étend du temps auquel le dispositif intermédiaire commence à se préparer à la réception au temps de réception réel (t3) du point fixe,
compenser l'horloge interne du dispositif intermédiaire sur la base d'un historique d'une erreur (ΔTP) qui est une différence entre le temps prédit et le temps de mesure réel et
transmettre le signal de balise au dispositif inférieur une fois que le dispositif intermédiaire a compensé l'horloge interne ; et
dans lequel le dispositif inférieur est conçu pour compenser son horloge interne sur la base du signal de balise transmis par le dispositif intermédiaire une fois que le dispositif intermédiaire a compensé l'horloge interne.

2. Système de communication radio multi-couche selon la revendication 1 dans lequel un axe de temps de chaque dispositif parmi le dispositif supérieur, le dispositif intermédiaire et le dispositif inférieur est divisé en créneaux ayant une durée fixe prédéterminée (T) ;
dans lequel le dispositif supérieur est conçu pour transmettre le signal de balise au niveau d'une tête de chacun des créneaux ;
dans lequel le dispositif intermédiaire est conçu pour transmettre au dispositif inférieur le signal de balise contenant des informations concernant une durée arbitraire (τ1) lorsque la durée fixe et la durée arbitraire (τ1) passent, une fois que le dispositif intermédiaire a reçu le signal de balise provenant du dispositif supérieur, la durée arbitraire (τ1) étant réglée plus courte que la durée fixe ; et
dans lequel le dispositif inférieur sur une couche spécifiée est conçu pour transmettre, à un autre dispositif inférieur qui est sur une couche plus basse que la couche spécifiée, le signal de balise contenant des informations concernant une durée arbitraire (τ2) lorsque la durée fixe et la durée arbitraire (τ2) passent, du temps qui est la durée arbitraire (τ1) du dispositif de relais en arrière du temps auquel le dispositif inférieur reçoit le signal de balise provenant du dispositif intermédiaire une fois que le dispositif inférieur a reçu le signal de balise provenant du dispositif intermédiaire, la durée arbitraire (τ2) étant réglée plus courte pour la durée fixe.
